# EUROPÄISCHE PATENTSCHRIFT

(11) **EP 1 093 712 B1**
(45) Veröffentlichungstag und Bekanntmachung des Hinweises auf die Patenterteilung: **09.03.2005**
(21) Anmeldenummer: 00121540.9
(22) Anmeldetag: 30.09.2000
(51) Int. Cl.: A01F 15/10

(54) **Schneidvorrichtung einer landwirtschaftlichen Erntebergungsmaschine**
Cutting device for an agricultural harvesting machine
Dispositif de coupe pour une machine agricole de récolte

(30) Priorität: 21.10.1999 DE 19950750
(43) Veröffentlichungstag der Anmeldung: 25.04.2001
(73) Patentinhaber: DEERE & COMPANY, Moline, Illinois 61265-8098 (US)
(72) Erfinder: Uros, Raymond, 70100 Rigny (FR); Repellin, Jérome, 38880 Autrans (FR); Simon, Jérome, 70100 Rigny (FR); Chabassier, Aurélien, 77400 Dampmart (FR)
(74) Vertreter: Magin, Ludwig Bernhard

(56) Entgegenhaltungen:
- EP-A- 0 205 854
- GB-A- 2 032 376
- US-A- 4 955 188
- US-A- 5 802 825

## Beschreibung

Die Erfindung betrifft eine Schneidvorrichtung einer landwirtschaftlichen Erntebergungsmaschine mit mehreren nebeneinander angeordneten Messern, die zwischen wenigstens zwei Stellungen verstellbar sind.

Die DE-A1-197 17 542 offenbart eine Schneidvorrichtung für eine landwirtschaftliche Erntemaschine, z. B. eine Rundballenpresse. Diese Schneidvorrichtung ist mit einem elektronischen, optischen oder mechanischen Fühler ausgestattet, der erkennt, wenn einige Messer sich nicht in der Schneidstellung befinden und somit die Anzahl der schneidenden Messer verändert wurde. Mit dieser Information wird der Druck zum Verstellen aller Messer gesteuert, um sicherzustellen, daß sie keinen zu hohen richtigen Ausweichwiderstand beim Auftreffen von Fremdkörpern einerseits und keinen zu geringen Ausweichwiderstand beim Schneidbetrieb andererseits bieten.

Das der Erfindung zugrunde liegende Problem wird darin gesehen, daß diese Vorrichtung auch bei nur einem einzigen ausgeschwenkten Messer annehmen kann, daß dieses Messer absichtlich ausgeschwenkt wurde, um die Anzahl der schneidenden Messer zu ändern, und den Haltedruck auf alle Messer erhöht.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise wird ermittelt, daß sich wenigstens ein einziges Messer nicht in seiner beabsichtigten Stellung befindet - dies mag die Schneidstellung oder eine Außerbetriebsstellung sein. Das Signal des Sensors kann dann auf vielfältige Weise benutzt werden, auf die falsche Stellung eines Messers hinzuweisen. So kann ein Warnhinweis erfolgen, ein Maschinenbetrieb unterbrochen, eine Einrückbewegung des Messers unternommen oder dergleichen Tätigkeit ausgeübt werden. Der Sensor kann durch Bewegungsmelder oder Kontakte die Stellung jedes einzelnen Messers separat erfassen.

Eine einfache, robuste und kostengünstige Ausführung eines Sensors besteht in der Verwendung einer Traverse, d.h. eines Bauelements, das alle Messer überspannt und von einem falsch positionierten Messer ausgelenkt, betätigt oder beaufschlagt wird. Eine solche Traverse kann ein Draht, ein Stahlseil, eine Kette, eine Stange oder dergleichen sein, die jeweils stark gespannt sind und auf nahezu jegliche Berührung hin einen Schalter betätigen, der ein entsprechendes Signal absendet, möglicherweise auch lediglich durch eine Stromunterbrechung. Die Verbindung zwischen dem Sensor und dem Messer oder eines das Messer in seiner Stellung haltenden Stellelements kann durch eine stete direkte Anlage erfolgen, oder erst nachdem das Messer oder das Stellelement einen bestimmten, insbesondere sehr kurzen, Weg zurückgelegt hat.

Wenn Aussparungen vorgesehen werden, in denen die Traverse aufgenommen wird, wird diese geführt und gegen äußere mechanische Einflüsse geschützt. Eine Auslenkung der Traverse ohne eine Verstellung eines Messers wird so regelmäßig unterbunden.

Die Traverse kann flexibel als Draht, Seil, Kette oder dergleichen ausgebildet und stets so gespannt sein, daß ein sich bewegendes Messer die Traverse bewegt. Eine derartige flexible Traverse kann zudem einem unregelmäßigen Verlauf von Messern oder deren Stellelementen folgen.

Eine starr ausgebildete Traverse kann z. B. die Form einer Stange haben, die gleichzeitig an den Messern oder deren Stellelementen anliegt.

Grundsätzlich reicht ein Schalter aus, der z. B. eine Zugbewegung an der Traverse feststellt. Mit mehreren Schaltern kann z. B. bei einer starren Traverse eine Auslenkung an den Endseiten oder in der Mitte abgegriffen werden, so daß ein sicheres Signal ermittelt werden kann, wenn sich die Traverse unterschiedlich weit bewegt.

Anstatt einer mechanischen Traverse kann auch eine energetische Traverse verwendet werden, d. h. es wird ein Energiefluß quer über die Messeranordnung geführt. Sobald dieser Energiefluß geschlossen oder unterbrochen wird, wird ein entsprechendes Signal erzeugt, das eine Aussage über die Stellung der Messer gibt.

Der Energiefluß kann in der Form einer Lichtschranke, von Schallwellen, eines Stromflusses oder dergleichen verwirklicht werden, was mit handelsüblichen Mitteln möglich ist.

Eine einfache Möglichkeit, das Entfernen der Messer von einer Anlagefläche festzustellen, besteht darin, daß es in einer Stellung einen elektrischen Kontakt herstellt, d. h. einen Schalter schließt, und diesen sofort unterbricht, wenn es wegschwenkt. In diesem Fall könnte ein Zeitrelais einbezogen werden, das kurzfristige Auslenkungen während des Betriebs ausfiltert.

Der Sensor kann dazu benutzt werden, eine Warnvorrichtung, z. B. eine Leuchte oder Hupe zu aktivieren, so daß eine Bedienungsperson auf eine Fehlstellung eines Messers hingewiesen wird. Es kann aber auch der Betrieb unterbrochen oder eine Vorrichtung aktiviert werden, die das falsch stehende Messer oder alle Messer in die Betriebsstellung bewegt.

In der Zeichnung sind drei nachfolgend näher beschriebene Ausführungsbeispiele der Erfindung dargestellt. Es zeigt:
- Fig. 1: eine Erntebergungsmaschine mit einer Schneidvorrichtung in Seitenansicht und schematischer Darstellung,
- Fig. 2: die Schneidvorrichtung nach einem ersten Ausführungsbeispiel mit allen Messern in einer Betriebsstellung in Draufsicht und schematischer Darstellung
- Fig. 3: die Schneidvorrichtung aus Figur 2 in Seitenansicht,
- Fig. 4: die Schneidvorrichtung aus Figur 2 mit einem sich nicht in der Betriebsstellung befindlichen Messer in Draufsicht,
- Fig. 5: die Schneidvorrichtung aus Figur 4 in Seitenansicht,
- Fig. 6: die Schneidvorrichtung nach einem zweiten Ausführungsbeispiel mit allen Messern in Betriebsstellung, in Draufsicht und in schematischer Darstellung,
- Fig. 7: die Schneidvorrichtung aus Fig. 6, wobei sich ein Messer nicht in der Betriebsstellung befindet, und
- Fig. 8: die Schneidvorrichtung nach einem dritten Ausführungsbeispiel, in Draufsicht und in schematischer Darstellung.

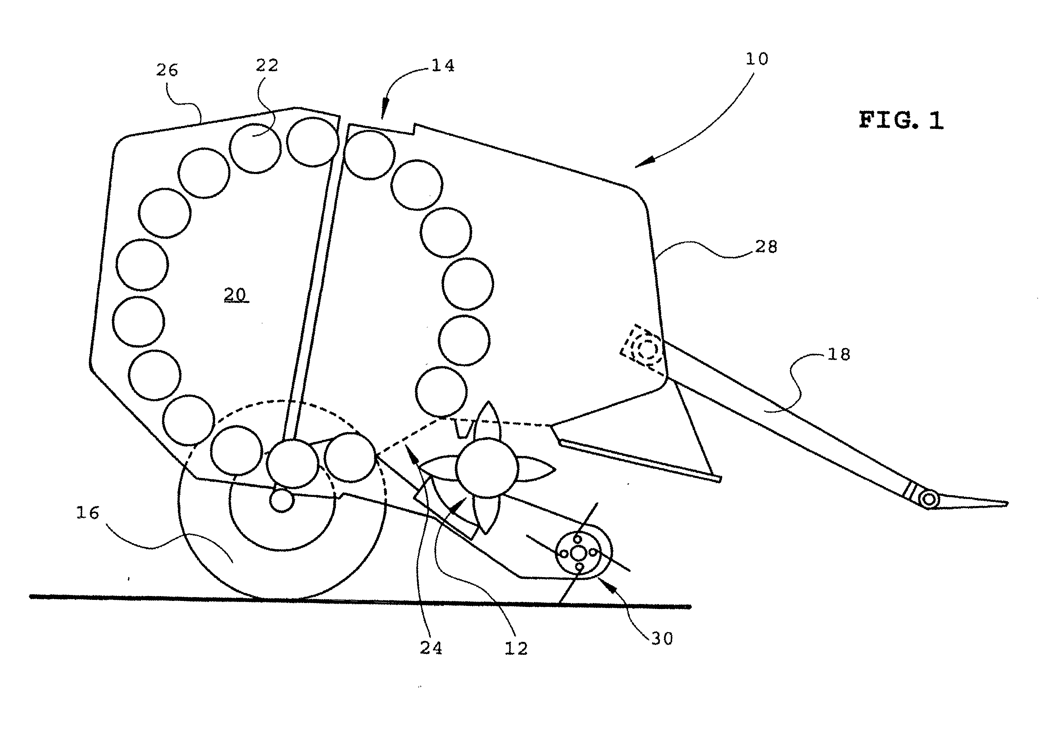

Figur 1 zeigt eine Erntebergungsmaschine 10 mit einer erfindungsgemäßen Schneidvorrichtung 12.

Die Erntebergungsmaschine 10 ist in der Form einer Rundballenpresse ausgeführt, könnte aber auch ein Ladewagen, eine Großballenpresse und dergleichen sein, bei denen das aufzunehmende Gut zerkleinert wird.

Die Erntebergungsmaschine 10 ist von bekannter Bauart und enthält einen Rahmen 14, der sich über Räder 16 auf dem Boden abstützt und mittels einer Deichsel 18 an ein nicht gezeigtes Zugfahrzeug angehängt werden kann. Der Rahmen 14 trägt zudem eine Preßkammer 20, die von Rollen 22 umgeben wird und einen Einlaß 24 aufweist. Die Rollen 22 sind auf einer Kreislinie angeordnet und erstrecken sich einesteils in einer vertikal schwenkbaren Heckklappe 26 und andernteils in einem starren Gehäuse 28. An der Unterseite des Gehäuses 28 und dem Einlaß 24 vorgelagert befindet sich ein Gutaufnehmer 30, dem stromabwärts die Schneidvorrichtung 12 folgt.

Die Aufgabe der Erntebergungsmaschine 10 besteht darin, auf dem Boden liegendes Erntegut, meist Gras, Heu oder Stroh, mittels des Gutaufnehmers 30 aufzunehmen, es mittels der Schneidvorrichtung 12 in kleine Stücke zu schneiden und in die Preßkammer 20 zu fördern, wo es zu einem kompakten Ballen gepreßt wird. Durch das Öffnen der Heckklappe 26 wird der Ballen auf den Boden abgegeben und kann weiterverarbeitet werden.

Die Schneidvorrichtung 12 ist im wesentlichen ebenfalls von bekanntem Aufbau und enthält einen Rahmen 32, eine Förderfläche 34, Messer 36, Stellelemente 38 und einen Sensor 40.

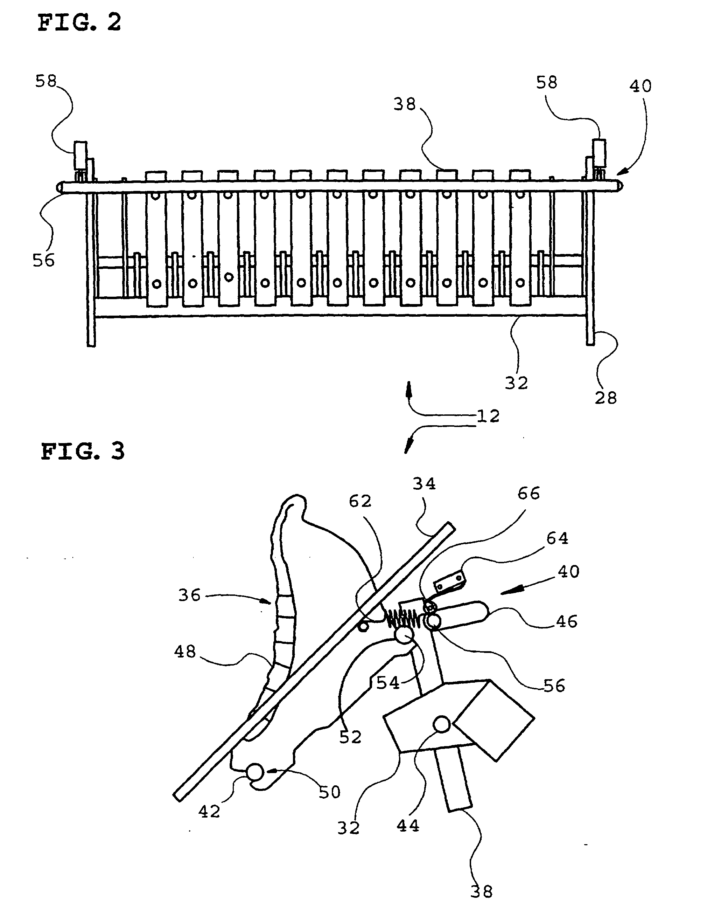

Der Rahmen 32 ist an dem Gehäuse 28 befestigt und trägt eine erste Achse 42, die sich über die Breite der Schneidvorrichtung 12 erstreckt. Eine zweite parallel dazu verlaufende Achse 44 dient der schwenkbaren Aufnahme der Stellelemente 38. Schließlich sind in dem Rahmen 32 bei dem Ausführungsbeispiel nach den Figuren 2 bis 5 auf beiden Seiten Langlöcher 46 vorgesehen.

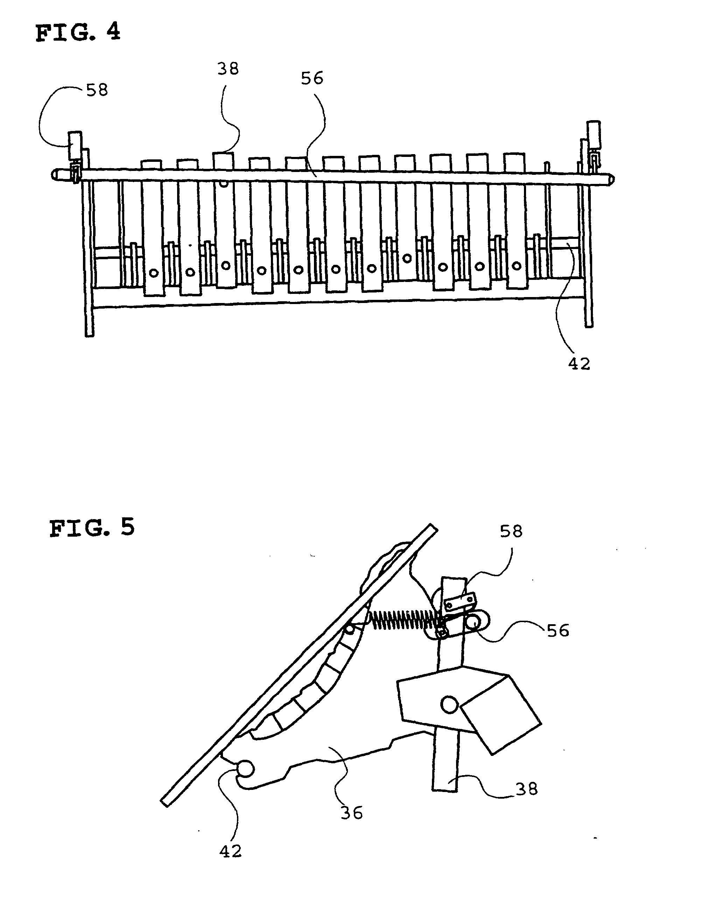

Die Förderfläche 34 erstreckt sich über die gesamte Breite und Länge der Messer 36 und führt das Erntegut auf seinem Weg von dem Gutaufnehmer 30 zu dem Einlaß 24. Die Förderfläche 34 ist im wesentlichen als ein Blech ausgebildet, das nicht näher bezeichnete Schlitze enthält, durch die sich die Messer 36 erstrecken. In einer in Figur 3 gezeigten Arbeitsstellung erstrecken sich die Messer 36 auf ihrer gesamten Länge durch die Schlitze, in einer in Figur 5 gezeigten Außerbetriebsstellung erstrecken sich die Messer 36 nahezu gar nicht durch die Schlitze. Während die Förderfläche 34 in gerader Form dargestellt ist, kann sie auch gekrümmt sein.

Die Messer 36 sind von bekannter Bauweise und weisen eine Schneidkante 48, eine Halteöffnung 50 und eine Ausnehmung 52 auf. Die Messer 36 sind mit seitlichem Abstand mit ihrer Halteöffnung 50 auf die Achse 42 aufgesetzt und können um diese zwischen ihrer Betriebsstellung und ihrer Außerbetriebsstellung schwenken. Die Form der Messer 36 entspricht im wesentlichen einem rechtwinkligen Dreieck.

Die Schneidkante 48 ist konkav gebogen und zeigt zu der Förderfläche 34. Angesichts der dreieckigen Form des Messers 36 kommt der Schneidkante 48 die Lage der Hypothenuse zu.

Die Halteöffnung 50 befindet sich in dem mit Blick auf die Zeichnung (Fig. 3 und Fig. 5) linken unteren Eckbereich und ist geeignet, die Achse 42 zu übergreifen.

Die Ausnehmung 52 befindet sich in dem mit Blick auf die Zeichnung (Fig. 3 und Fig. 5) rechten oberen Eckbereich und ist geeignet, eine Rolle 54 des Stellelements 38 aufzunehmen und bis zu einem bestimmten Widerstand zu halten.

Jedem Messer 36 ist ein Stellelement 38 zugeordnet, das dazu dient, das Messer 36 in seiner Betriebsstellung zu halten oder zurückzuschwenken, oder das in eine Lage gebracht werden kann, in der das Messer 36 in gewollter Weise die Außerbetriebsstellung einnehmen kann. Das Stellelement 38 ist auf nicht gezeigte Weise derart federbelastet, daß die Rolle 54 stets in die Ausnehmung 52 eindringt. Wirkt auf das Messer 36 eine die Haltekraft des Stellelements 38 übersteigende Kraft, bewegt sich die Rolle 54 aus der Ausnehmung 52 heraus und läßt das Messer 36 in die in Figur 5 gezeigte Stellung schwenken.

Der Sensor 40 ist gemäß den unterschiedlichen Ausführungsformen dieser Erfindung unterschiedlich ausgebildet, hat aber stets die Aufgabe festzustellen, ob sich wenigstens eines der Messer 36 nicht in seiner in Figur 3 gezeigten Betriebsstellung befindet.

Bei dem Ausführungsbeispiel nach den Figuren 2 bis 5 ist eine Traverse 56 und ein linker und ein rechter Schalter 58 vorgesehen.

Die Traverse 56 ist in diesem Ausführungsbeispiel als eine gerade, starre und zylindrische Stange ausgebildet, die sich über die gesamte Bereite der Schneidvorrichtung 12 und durch die Langlöcher 46 hindurch erstreckt. Der Bewegungsfreiraum der Traverse 56 wird durch die Größe und Lage der Langlöcher 46 bestimmt. Die Traverse 56 wird mittels Federn 62 stets an den Stellelementen 38 in Anlage gehalten. Die Federn 62 sind als Schraubenzugfedern ausgebildet und übergreifen mit endseitigen Ösen die Traverse 56 einerseits und einen nicht bezeichneten Bolzen auf dem Messer 36 andererseits. Es ist ersichtlich, daß die Bewegung jedes Messers 36 auch eine Bewegung des Stellelements 38 und der Traverse 56 hervorruft.

Die Schalter 58 sind gleich ausgebildet und enthalten ein Schaltgehäuse 64 und ein Schaltglied 66.

Das Schaltgehäuse 64 weist nicht gezeigte Ein-Aus-Kontakte auf, die auf ebenfalls nicht gezeigte Weise mittels Kabeln an eine Warn-, Steuer- oder Regelungsvorrichtung angeschlossen sind und dieser je nach Stellung ein entsprechendes Signal zuführen. Die Warn-, Steuer- oder Regelungsvorrichtung kann so ausgebildet sein, daß sie dann kein entsprechendes Warn- oder Betätigungssignal abgibt, wenn alle Messer 36 absichtlich in die in Figur 5 gezeigte Stellung gebracht wurden und die Schneidvorrichtung 12 bewußt einen Außerbetriebszustand einnehmen soll.

Jedes Schaltglied 66 enthält in bekannter Weise einen Federbügel und eine Rolle, die auf dem Umfang der Traverse 56 abrollen kann. In der Stellung der Traverse 56 gemäß Figur 3 nimmt jeder Schalter 58 einen Schaltzustand, in der Stellung gemäß Figur 5 einen anderen Schaltzustand ein. Vorzugsweise ist die Schaltung so ausgebildet, daß ein Warn- oder Schaltsignal dann gegeben wird, wenn der Stromkreis unterbrochen ist, was in der Stellung nach Figur 5 der Fall sein soll.

Jeder Schalter 58 wird von einem Endbereich der Traverse 56 beaufschlagt, so daß eine Betätigung stattfindet, wann immer sich ein Messer 36 in seine Stellung nach Figur 5 bewegt.

Während Figur 2 eine Situation zeigt, in der alle Messer 36 die gleiche Stellung im Betriebszustand einnehmen, stellt Figur 4 eine Situation dar, in der das dritte Messer 36 von links eine Außerbetriebsstellung einnimmt und die Traverse 56 derart auslenkt, daß der mit Blick auf die Zeichnung linke Schalter 58 betätigt wird und ein entsprechendes Signal abgibt. Das dritte Messer 36 könnte z. B. aufgrund einer Fremdkörpereinwirkung oder klebriger Gärsäfte in der Außerbetriebsstellung hängen geblieben sein.

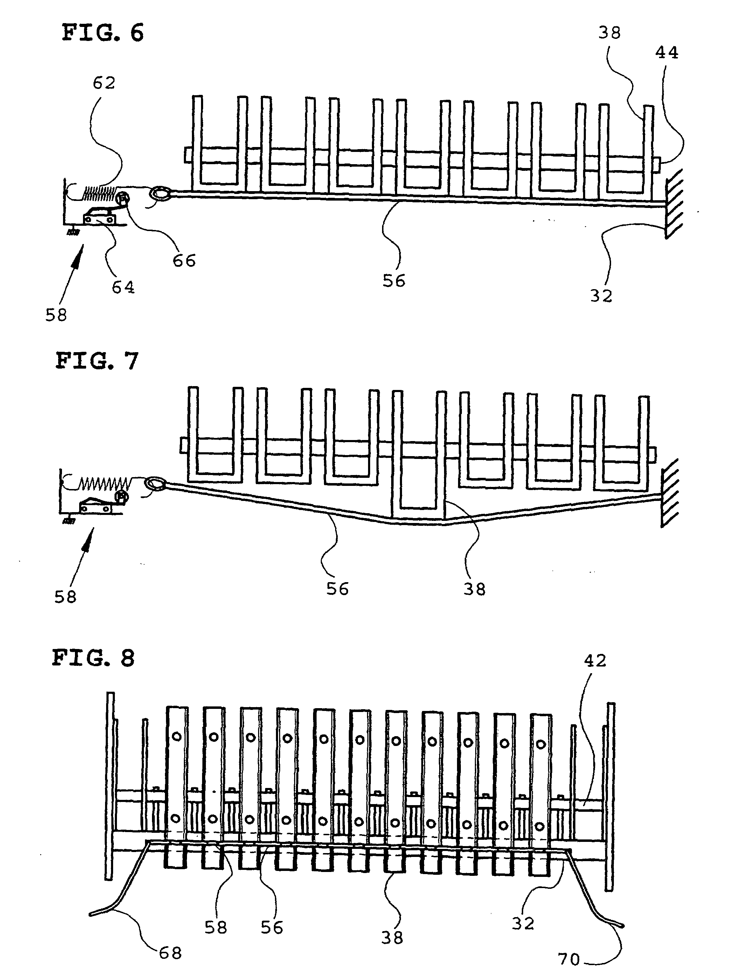

Die Figuren 6 und 7 zeigen ein anderes Ausführungsbeispiel, bei dem eine flexible Traverse 56, nur ein Schalter 58 und nur eine Feder 62 vorgesehen ist.

Die Traverse 56 wird von einem flexiblen Zugmittel, nämlich einem Seil, gebildet. Sie ist einerseits direkt und andererseits mittels der Feder 62 an den Rahmen 32 angeschlossen und liegt an der Rückseite der Stellelemente 38 stramm an, wenn sich die Messer 36 in ihrer Betriebsstellung befinden, wie sie an sich in den Figuren 2 und 3 dargestellt ist. In nicht dargestellter Weise könnte diese Traverse 56 auch in Ausnehmungen an den Stellelementen 38 oder Messern 36 geführt sein, oder sich durch geschlossene Ausnehmungen, Löcher, in den Messern 36 oder Stellelementen 38 erstrecken.

Der einzige Schalter 58 ist so angeordnet, daß der Windungsbereich der Feder 62 auf das Schaltglied 66 wirken kann, wenn die Feder 62 aufgrund der sich spannenden Traverse 56 gestreckt wird. Es reicht ein einziger Schalter 58 aus, da eine Spannung durch die Traverse 56 in jedem Fall auftritt, in dem ein Messer 36 ausgelenkt wird - unabhängig von dessen Lage. Die Feder 62 könnte auch in das Schaltgehäuse 64 integriert sein.

Die Feder 62 ist in gleicher Weise wie bei dem ersten Ausführungsbeispiel ausgeführt.

Der Schalter 58 ist in gleicher Weise wie bei dem vorherigen Ausführungsbeispiel ausgebildet, allerdings so angeschlossen, daß er in der niedergedrückten Stellung ein Signal abgibt.

Figur 6 zeigt die Situation, in der alle Messer 36 ihre Betriebsstellung einnehmen; die Feder 62 ist lediglich vorgespannt und der Schalter 58 ist nicht betätigt.

Figur 7 zeigt eine Situation, in der das mittlere Messer 36 bzw. das mittlere Stellelement 38 ausgelenkt ist; die Traverse 56 ist ebenfalls ausgelenkt und spannt die Feder 62, so daß deren Windung das Schaltglied 66 betätigt und den Schalter 58 betätigt, der daraufhin ein entsprechendes Signal aussendet.

Schließlich zeigt Fig. 8 ein drittes Ausführungsbeispiel, indem der Sensor 40 anstatt einer mechanischen Traverse 56 eine elektrische Traverse 56 in der Art einer Stromdurchführung enthält, die pro Messer 36 bzw. Stellelement 38 einen Schalter 58 aufweist.

An die Traverse 56 ist einerseits ein Eingangskabel 68 und andererseits ein Ausgangskabel 70 angeschlossen, die der Stromdurchführung dienen. Die Traverse 56 selbst wird von einer Vielzahl von Stromleitungen zwischen den Schaltern 58 und an den endseitigen Schaltern 58 gebildet. Die Schalter 58 werden jeweils von einem Stellelement 38 geschlossen, das zwei benachbarte Stromleitungen bzw. mit diesen verbundene nicht gezeigte Kontakte überbrückt. In stark äußerem Schmutz unterliegenden Anwendungsfällen kann der Schalter 58 auch in sich abgeschlossen und in dem Rahmen 42 oder den Stellelementen 38 eingesetzt sein und infolge einer Betätigung der Messer 36 direkt oder indirekt betätigt werden.

## Patentansprüche

1. Schneidvorrichtung (12) einer landwirtschaftlichen Erntebergungsmaschine (10) mit mehreren nebeneinander angeordneten Messern (36), die zwischen wenigstens zwei Stellungen verstellbar sind, **gekennzeichnet durch** einen Sensor (40), der mit jedem Messer (36) in Verbindung steht und ein Signal erzeugt, wenn sich die Stellung wenigstens eines Messers (36) von der Stellung wenigstens eines anderen Messers (36) unterscheidet.

2. Schneidvorrichtung nach Anspruch 1, **dadurch gekennzeichnet, daß** der Sensor (40) eine Traverse (56) und wenigstens einen Schalter (58) enthält, wobei die Traverse (56) und die Messer (36) oder deren Stellelemente (38) aneinander anliegen.

3. Schneidvorrichtung nach Anspruch 2, **dadurch gekennzeichnet, daß** die Messer (36) einseitig offene oder geschlossene Aussparungen zur Aufnahme der Traverse (56) aufweisen.

4. Schneidvorrichtung nach einem oder mehreren der vorherigen Ansprüche, **dadurch gekennzeichnet, daß** die Traverse (56) flexibel ausgebildet ist.

5. Schneidvorrichtung nach einem oder mehreren der Ansprüche 1 bis 3, **dadurch gekennzeichnet, daß** die Traverse (56) starr ausgebildet ist.

6. Schneidvorrichtung nach einem oder mehreren der vorherigen Ansprüche, **dadurch gekennzeichnet, daß** mehrere Schalter (58) vorgesehen sind.

7. Schneidvorrichtung nach einem oder mehreren der vorherigen Ansprüche, **dadurch gekennzeichnet, daß** der Sensor (40) in der Traverse (56) einen Energiefluß über die Messer (36) aussendet und eine Unterbrechung des Energieflusses erfaßt.

8. Schneidvorrichtung nach einem oder mehreren der Ansprüche, **dadurch gekennzeichnet, daß** der Energiefluß ein sichtbarer oder unsichtbarer Wellenstrahl ist.

9. Schneidvorrichtung nach einem oder mehreren der vorherigen Ansprüche, **dadurch gekennzeichnet, daß** der Energiefluß elektrischer Strom ist und die Messer (36) oder Stellelemente (38) der Messer (36) in einer Stellung Schalter (58) für den Energiefluß schließen.

10. Schneidvorrichtung nach einem oder mehreren der vorherigen Ansprüche, **dadurch gekennzeichnet, daß** der Sensor (40) auf eine Warn- oder Betätigungsvorrichtung wirkt.

## Claims

1. A cutting device (12) of an agricultural harvesting machine (10), with a plurality of blades (36) arranged alongside each other and which can be adjusted between at least two positions, **characterized by** a sensor (40) which is coupled to each blade (36) and generates a signal when the position of at least one blade (36) differs from the position of at least one other blade (36).

2. A cutting device according to claim 1, **characterized in that** the sensor (40) includes a cross member (56) and at least one switch (58), wherein the cross member (56) and the blades (36) or their positioning elements (38) bear on one another.

3. A cutting device according to claim 2, **characterized in that** the blades (36) comprise recesses, open on one side or closed, for reception of the cross member (56).

4. A cutting device according to one or more of the preceding claims, **characterized in that** the cross member (56) is of flexible form.

5. A cutting device according to one or more of claims 1 to 3, **characterized in that** the cross member (56) is of rigid form.

6. A cutting device according to one or more of the preceding claims, **characterized in that** a plurality of switches (58) are provided.

7. A cutting device according to one or more of the preceding claims, **characterized in that** the sensor (40) in the cross member (56) emits a power flow over the blades (36) and detects an interruption in the power flow.

8. A cutting device according to one or more of the preceding claims, **characterized in that** the power flow is a visible or invisible wave beam.

9. A cutting device according to one or more of the preceding claims, **characterized in that** the power flow is an electric current and in one position the blades (36) or positioning elements (38) of the blades (36) close switches (58) for the power flow.

10. A cutting device according to one or more of the preceding claims, **characterized in that** the sensor (40) acts on a warning or actuating device.

## Revendications

1. Dispositif de coupe (12) d'une récolteuse (10) agricole comprenant plusieurs couteaux (36), qui sont agencés les uns à côté des autres et qui sont réglables entre au moins deux positions, **caractérisé par** un capteur (40) qui est en liaison avec chaque couteau (36) et génère un signal lorsque la position d'au moins un couteau (36) diffère de la position d'au moins un autre couteau (36).

2. Dispositif de coupe selon la revendication 1, **caractérisé en ce que** le capteur (40) comporte une traverse (56) et au moins un commutateur (58), la traverse (56) et les couteaux (36) ou les éléments de réglage de ceux-ci (38) étant en contact les uns avec les autres.

3. Dispositif de coupe selon la revendication 2, **caractérisé en ce que** les couteaux (36) comportent des évidements ouverts ou fermés sur un côté, destinés à recevoir la traverse (56).

4. Dispositif de coupe selon une ou plusieurs des revendications précédentes, **caractérisé en ce que** la traverse (56) est conçue de manière flexible.

5. Dispositif de coupe selon une ou plusieurs des revendications 1 à 3, **caractérisé en ce que** la traverse (56) est conçue de manière rigide.

6. Dispositif de coupe selon une ou plusieurs des revendications précédentes, **caractérisé en ce qu'**il est prévu plusieurs commutateurs (58).

7. Dispositif de coupe selon une ou plusieurs des revendications précédentes, **caractérisé en ce que** le capteur (40) émet un flux d'énergie dans la traverse (56) par l'intermédiaire des couteaux (36) et détecte une interruption du flux d'énergie.

8. Dispositif de coupe selon une ou plusieurs des revendications précédentes, **caractérisé en ce que** le flux d'énergie est un faisceau d'ondes visible ou invisible.

9. Dispositif de coupe selon une ou plusieurs des revendications précédentes, **caractérisé en ce que** le flux d'énergie est un courant électrique et les couteaux (36) ou les éléments de réglage (38) des couteaux (36) dans une position ferment le commutateur (58) pour le flux d'énergie.

10. Dispositif de coupe selon une ou plusieurs des revendications précédentes, **caractérisé en ce que** le capteur (40) agit sur un dispositif d'avertissement ou dispositif de commande.
